# EUROPÄISCHE PATENTSCHRIFT

(11) **EP 0 782 380 B1**
(45) Veröffentlichungstag und Bekanntmachung des Hinweises auf die Patenterteilung: **22.07.1998**
(21) Anmeldenummer: 95934084.5
(22) Anmeldetag: 21.09.1995
(51) Int. Cl.: A01D 34/66

(54) **SICHELMÄHWERK**
SICKLE MOWING MACHINE
FAUCHEUSE

(30) Priorität: 24.09.1994 DE 4434272
(43) Veröffentlichungstag der Anmeldung: 09.07.1997
(73) Patentinhaber: Tutschka, Alfred, 64546 Mörfelden-Walldorf (DE)
(72) Erfinder: Tutschka, Alfred, 64546 Mörfelden-Walldorf (DE)
(74) Vertreter: Luderschmidt, Schüler & Partner GbR
(86) Internationale Anmeldenummer: EP9503716
(87) Internationale Veröffentlichungsnummer: WO9608955

(56) Entgegenhaltungen:
- WO-A-92/02121
- FR-A- 2 643 213
- GB-A- 1 201 938
- US-A- 3 114 229
- US-A- 4 226 074
- US-A- 5 212 938
- US-A- 5 267 429

## Beschreibung

Die Erfindung geht aus von einem Sichelmähwerk mit den Merkmalen des Oberbegriffs des Anspruchs 1. Ein Sichelmähwerk in Form eines Rasenmähers ist aus der DE 40 34 978 A1

bekannt. Der bekannte Sichelmäher hat ein zweifllügliges Messer, das um eine vetikale Achse rotierend antreibbar ist. Das Messer weist je eine Schneide an einer in Rotationsrichtung vorderen Kante jedes Flügels auf.

Weiterhin ist das Messer mit Leiteinrichtungen versehen: Dies sind in etwa radial verlaufende Leitschaufeln im Bereich hinterer Kanten der Messerflügel oder auf den Messerflüglen stehende, in etwa radial verlaufenden Abweiser. Die Leiteinrichtung des einen Messerflügels weist nach oben, die Leiteinrichtung des anderen Messerflügels weist nach unten. Dadurch wird bewirkt, daß abgeschnittenes Mähgut durch die Rotation des Messers im Bereich der nach oben weisenden Leiteinrichtung aufgewirbelt und im Bereich der nach unten weisenden Leiteinrichtung wieder zu Boden gedrückt wird. Das abgeschnittene Mähgut gelangt dadurch mehrfach in den Schneidenbereich, wobei es vielfach zerkleinert ("pulverisiert") wird. Das so zerkleinerte Mähgut kann als Gründünger auf dem Rasen verbleiben, es braucht nicht zusammengerecht werden.

Damit das Messer des bekannten Sichelmähers seine Wirkung voll entfaltet, ist es in einer topfförmigen, an ihrer Unterseite offenen Abdeckung untergebracht, die im übrigen geschlossen ausgebildet ist, also insbesondere keine Auswurföffnung an ihrem Umfang aufweist. Von Nachteil bei dem bekannten Sichelmäher ist, daß seine Schnittbreite durch die Länge des Messers, also durch den bei stehendem Sichelmäher vom rotierenden Messer überstrichenen Mähkreis, begrenzt ist.

Der Oberbegriff des Patentanspruchs geht von einem Sichelmähwerk nach WO 92/02121 aus. Das bekannte Mäherwerk weist ein Gehäuse mit drei versetzt zueinander angeordneten Abdeckungen auf, die jeweils ein zweiflügeliges Messer aufnehmen, das drehfest mit einer vertikalen Antriebswelle verbunden ist. Die Umfangswandungen der Abdeckungen des bekannten Mähwerks sind zylinderförmig ausgebildet. Die Abdeckungen sind am Messerumfang geschlossen mit Ausnahme einer Durchtrittsöffnung zu der Abdeckung des benachbarten Messers. Innerhalb der Abdeckungen sind Leiteinrichtungen vorgesehen, die bewirken sollen, daß sich das geschnittene Mähgut durch die Rotation der Messer innerhalb der Abdeckungen auf kreisförmigen Bahnen bewegt, um dann nach unten gedrückt zu werden. In einer als besonders vorteilhaft herausgestellten Ausführungsform sind die Öffnungen in den Abdeckungen derart ausgebildet, daß das Mähgut innerhalb der Abdeckungen verbleibt und diese nicht durch die seitlichen Öffnungen verläßt.

Der Erfindung liegt die Aufgabe zugrunde, ein Sichelmähwerk der im Oberbegriff des Patentanspruchs 1 angegebenen Art derart auszubilden, daß eine verbesserte Zerkleinerungswirkung erzielt wird.

Die Lösung der Aufgabe erfolgt mit den im Patentanspruch 1 angegebenen Merkmalen.

Das erfindungsgemäße Sichelmähwerk hat den Vorteil, daß große Flächen, wie Parkflächen, in kurzer Zeit, selbst bei lang gewachsenem Gras auf eine niedrige Rasenhöhe geschnitten werden können, ohne daß Mähgut entfernt werden müßte.

Eine weitere Bearbeitung der gemähten Flächen erübrigt sich. Es lassen sich erhebliche Bearbeitungskosten einsparen, da das Mähgut weder abtransportiert noch entsorgt oder anderweitig verwertet werden muß.

Gemäß der Erfindung sind mehrere, beispielsweise zwei oder drei Messer in bezug auf die Fortbewegungseinrichtung des Sichelmähwerks während des Mähens nebeneinander angeordnet. In einem Durchgang wird ein Streifen abgemäht, dessen Breite in etwa der Summe der Messerlängen entspricht. Damit die Messer ihre Zerkleinerungswirkung voll entfalten, ist jedes Messer in einer eigenen Abdeckung aufgenommen, wobei die Abdeckungen mehrerer Messer einstückig miteinander sein können.

Um die Zerkleinerungswirkung der einzelnen Messer weiter zu verbessern, weisen die Abdeckungen kurze Durchtrittsöffnungen für das Mähgut zur jeweils benachbarten Abdeckung in ihrer Umfangswandung auf. Durch diese Durchtrittsöffnungen gelangt zumindest ein Teil des Mähguts, das durch die Rotation eines Messers nicht nur nach oben oder nach unten, sondern zugleich auch in tangentialer Richtung bewegt wird, in den Wirkungskreis eines benachbarten Messers, wo es weiter zerkleinert wird.

Der radiale Abstand der Umfangswandung einer Abdeckung eines Messers nimmt von dessen Rotationsachse im Bereich einer Durchtrittsöffnung für das Mähgut in Rotationsrichtung des jeweiligen Messers und in Richtung auf die Durchtrittsöffnung hin zu. Die Umfangswandung kann in diesem Bereich beispielsweise spiralförmig oder tangential verlaufen. Durch diese Ausbildung der Umfangswandung der Messerabdeckungen "öffnet" sich die Durchtrittsöffnung für durch sie hindurchtretendes Mähgut, das sich in etwa tangential zum rotierenden Messer bewegt. Der wirksame Öffnungsquerschnitt senkrecht zur Bewegungseinrichtung des durch die Durchtrittsöffnung hindurchtretenden Mähguts ist bei gleicher Länge der Durchtrittsöffnung breiter als bei einer kreisförmig bis zur Durchtrittsöffnung verlaufenden Umfangswandung. Durch diese Ausgestaltung der Erfindung gelangt mehr Mähgut aus dem Wirkungsbereich eines Messers in den Wirkungsbereich eines benachbarten Messers, was die Zerkleinerungswirkung verbessert.

Vorzugsweise sind die Messer mit solchem Abstand voneinander angeordnet, daß sich ihre Mähkreise nicht überschneiden. Das heißt, der Abstand der Rotationsachsen zweier benachbarter Messer ist geringfügig größer als die Länge eines Messers (im Fall unterschiedlich langer Messer ist der Abstand der Rotationsachsen geringfügig größer als die halben Längen beider Messer zusammengenommen). Durch diese Anordnung der Messer zueinander können die Enden einander benachbarter Messer sich nicht berühren. Eine Synchronisation der Messer ist daher nicht erforderlich. Weiterhin können die Messer in gleicher Rotationsrichtung angetrieben werden, wodurch identische Messer verwendbar sind. Dies verringert die Herstellungskosten.

Damit keine ungemähten Streifen zwischen den von den einzelnen Messern abgemähten Streifen verbleiben, werden die Rotationsachsen der Messer bei einer bevorzugten Ausgestaltung der Erfindung nicht genau nebeneinander, sondern in Bewegungsrichtung des erfindungsgemäßen Sichelmähwerks schräg nach vorn oder nach hinten und soweit nach innen versetzt angeordnet, daß sich die von den einzelnen Messern abgemähten Streifen an ihren Rändern überschneiden. Die schräge Anordnung der Rotationsachsen der Messer zueinander kann pfeilförmig oder diagonal erfolgen. Mit pfeilförmig ist gemeint, daß die Rotationsachsen der Messer ausgehend von einem oder zwei mittleren Messern nach beiden Seiten schräg nach hinten (oder auch nach vorn) versetzt angeordnet sind. Bei diagonaler Anordnung sind die Rotationsachsen aller Messer von einem äußeren Messer ausgehend schräg nach hinten versetzt angeordnet.

Die Länge einer Durchtrittsöffnung beträgt bei Ausgestaltungen der Erfindung zwischen etwa einem Drittel und dem ganzen Radius des Messers bzw. der Umfangswandung.

Bei einer Weiterbildung der Erfindung ist das Sichelmähwerk an einem Traktor oder dgl. als Arbeitsfahrzeug anbringbar. Es kann freitragend an dem Arbeitsfahrzeug angebracht sein oder sich über ein oder mehrere Stützräder auf dem Boden abstützen. Zum Antrieb werden die Messer vorzugsweise an eine Zapfwelle des Arbeitsfahrzeugs angeschlossen. Der Antrieb der einzelnen Messer erfolgt in an sich bekannter Weise mittels Verteilerwellen sowie über Winkel- und Verzweigungsgetriebe. Auch ist es möglich, die Messer untereinander mit Hilfe von Keilriemen anzutreiben, die um Keilriemenscheiben, welche drehfest auf den Antriebswellen der Messer angebracht sind, umlaufen. Die Keilriemenscheiben werden zusammen mit den Keilriemen vorzugsweise oberhalb der Abdeckungen angeordnet.

Um eine gute Wirkung der Messer zu erzielen, reichen die Abdeckungen vorzugsweise bis dicht über den Boden herunter, so daß die Messer in mit Ausnahme eines Spalts am Boden geschlossenen Räumen rotieren. Die geschnittenes Mähgut aufwirbelnde und wieder herabdrückende Wirkung der einzelnen Messerflügel verbessert sich dadurch.

Um bis dicht über den Boden herunter reichende Abdeckungen unabhängig von der gewünschten Schnitthöhe beibehalten zu können, sind die Messer in bevorzugter Ausgestaltung der Erfindung unabhängig von den Abdeckungen in der Höhe verstellbar.

Im Folgenden wird die Erfindung anhand der Zeichnung näher erläutert, die Ausführungsbeispiele der Erfindung zeigt. Es zeigen:
- Figur 1: ein erfindungsgemäßes Sichelmähwerk von unten; und
- Figur 2: einen abgewinkelten Schnitt entlang Linie II-II in Figur 1.

Die Figuren sind als Skizzen zu verstehen und teilweise schematisiert.

Das im Ausführungsbeispiel dargestellte Sichelmähwerk 10 hat drei zweiflüglige Messer 12, 14, 16, die um vertikale Rotationsachsen 18, 20, 22 gleichsinnig in Pfeilrichtung U rotierend antreibbar sind.

Die Messer 12, 14, 16 sind in Bezug auf eine Fortbewegungsrichtung s des Sichelmähwerks 10 während des Mähens nebeneinander angeordnet, wobei die beiden äußeren Messer 12, 16 um einen Abstand a nach hinten versetzt sind. Der absolute Abstand der Rotationsachsen 18, 20, 22 voneinander ist etwas größer als die Länge der Messer 12, 14, 16, so daß die Messerenden einander nicht berühren können. Der Abstand c der Rotationsachsen 18, 20, 22 quer zur Fortbewegungsrichtung s beim Mähen ist etwas kleiner als die Länge der Messer 12, 14, 16, so daß sich Mähstreifen der einzelnen Messer 12, 14, 16 überlappen und keine ungemähten Streifen zwischen den von den einzelnen Messern 12, 14, 16 gemähten Streifen stehen bleiben.

In den beiden Figuren sind zwei unterschiedliche Messer-Ausführungsformen dargestellt, in der Praxis ist jedoch die Verwendung dreier identischer Messer 12, 14, 16 vorgesehen.

Die beiden in den Figuren links und in der Mitte dargestellten Messer 12, 14 sind identisch. Sie bestehen aus einem Flachstahl, der in der Mitte drehfest auf jeweils einer Antriebswelle 24, 26 drehfest aufgenommen ist. Von der Antriebswelle 24, 26 erstrecken sich Messerflügel 28 in beide Richtungen. Eine in Rotationsrichtung U vordere Kante der Messerflügel 28 ist zu einer Schneide 30 geschliffen. Ein hinterer Randbereich jeweils eines Messerflügels 28 jedes der beiden Messer 12, 14 ist als Leitschaufel 32 schräg nach oben gebogen, ein hinterer Randbereich des jeweils anderen Messerflügels 28 ist als Leitschaufel 32 schräg nach unten gebogen. Diese Leitschaufeln 32 wirbeln bei der der Rotation der Messer 12, 14 geschnittenes Mähgut auf bzw. drücken das aufgewirbelte Mähgut wieder nach unten. Das Mähgut gelangt dadurch nach dem Schneiden mehrfach in den Bereich der Schneiden 30 und wird dabei fein zerkleinert ("pulverisiert").

Das in den Figuren rechts dargestellte Messer 16 ist ebenfalls aus einem Flachstahl gefertigt, der in seiner Mitte drehfest auf einer Antriebswelle 34 aufgenommen ist. In Rotationsrichtung U vordere Kanten des Messers 16 sind wiederum zu Schneiden 36 geschliffen. Dieses Messer 16 hat die Besonderheit, daß ein Mittelbereich 38 seiner Messerflügel 40 parallel nach oben aus der Messerebene herausgeformt ist, wodurch dieses Messer 16 zwei Schnittebenen in unterschiedlichen Höhen abhängig vom Radius aufweist.

Als Leiteinrichtungen 42 sind zwei Bleche an das Messer 16 angeschweißt. Die beiden Leiteinrichtungen 42 verlaufen in radialer Richtung, sie sind außerhalb der nach oben aus der Ebene des Messers 16 herausgeformten Mittelbereiche 38 angeordnet, wobei sich die eine Leiteinrichtung 42 oben auf dem einen Messerflügel 40 und die andere Leiteinrichtung 42 unten am anderen Messerflügel 40 befindet. Diese Leiteinrichtungen 42 des Messers 16 bewirken - wie die Leitschaufeln 32 der beiden anderen Messer 12, 14 - ein Aufwirbeln und Herabdrücken abgeschnittenen Mähguts, so daß dieses vielfach in den Schneidenbereich des Messers 16 gelangt und dabei mehrfach zerkleinert wird.

An Außenenden der Messerflügel 40 des in den Figuren rechts gezeichneten Messers 16 sind tangential verlaufende Endscheiben 44 angeschweißt. Diese Endscheiben 44 verlangsamen eine radiale Bewegungskomponente des abgeschnittenen Mähguts, das vom Messer 16 in tangentialer Richtung beschleunigt wird. Dadurch wird das Mähgut länger im Schneidenbereich des Messers 16 gehalten und dadurch öfters zerschnitten. Die Zerkleinerungswirkung des Messers 16 wird durch die Endscheiben 44 erhöht.

Alle drei Messer 12, 14, 16 sind in einer eigenen, topfartigen, unten offenen Abdeckung 46 aufgenommen, die das Aufwirbeln und Herabdrücken des abgeschnittenen Mähguts wirkungsvoll unterstützt und dadurch die Zerkleinerungseffektivität der Messer 12, 14, 16 steigert. Die topfförmigen Abdeckungen 46 sind nach oben geschlossen. Am Messerumfang sind die Abdeckungen 46 ebenfalls geschlossen mit Ausnahme einer Durchtrittsöffnung 48 zum jeweils benachbarten Messer 12, 14, 16. Durch diese Durchtrittsöffnungen 48 gelangt ein Teil des abgeschnittenen Mähguts, das von einem der Messer 12, 14, 16 abgeschnitten worden ist, und das zusätzlich zur Aufwirbelung und zum Herabdrücken vom rotierenden Messer 12, 14, 16 in tangentialer Richtung beschleunigt wird, in den Wirkungsbereich eines benachbarten Messers 12, 14, 16. Diese Durchtrittsöffnungen 48 in Umfangswandungen 50 aneinander angrenzender Abdeckungen 46 haben einen Länge von etwa 2/3 einer Messerflügellänge, d. h. von 1/3 der Messerlänge.

Die Umfangswandungen 50 sind über ihren größten Umfangsbereich zylinderförmig ausgebildet. Lediglich in einem Abschnitt 52, der sich in Rotationsrichtung U der Messer 12, 14, 16 gesehen vor einer Durchtrittsöffnung 48 befindet, vergrößert sich der radiale Abstand der Umfangswandungen 50 von der jeweiligen Rotationsachse 18, 20, 22 wie dargestellt tangential oder beispielsweise auch spiralförmig (nicht dargestellt). Diese Abschnitte 52 mit sich vergrößerndem Abstand der Umfangswandungen 50 von den Rotationsachsen 18, 20, 22 enden an der jeweiligen Durchtrittsöffnung 48. Durch diese Vergrößerungen des radialen Abstands der Umfangswandungen 50 von der jeweiligen Rotationsachse 18, 20, 22 "öffnen" sich die Durchtrittsöffnungen 48 für geschnittenes Mähgut, das von einem der Messer 12, 14, 16 in tangentialer Richtung beschleunigt sich in den Wirkungsbereich eines benachbarten Messers 12, 14, 16 bewegt. Die wirksame Breite d der Durchtrittsöffnung 48 quer zur Bewegungsrichtung von Mähgut, das aus einer Abdeckung 46 in eine benachbarte Abdeckung 46 übertritt, ist breiter, als sie bei bis zu den Durchtrittsöffnungen 48 zylindrisch ausgebildeter Umfangswandung 50 wäre. Die Durchtrittsöffnungen 48 können auf diese Weise kurz ausgebildet sein und lassen dennoch ausreichend Mähgut von einer Abdeckung 46 in eine benachbarte Abdeckung 46 gelangen. Möglichst kurze Durchtrittsöffnungen 48 sind notwendig, da die Abdeckungen 46 nach oben und zum Umfang hin möglichst geschlossen ausgebildet sein sollten, um die Effektivität der Messer 12, 14, 16 beim Aufwirbeln und Herabdrücken des Mähguts zu untersützen.

Die drei Abdeckungen 46 sind an einem freitragenden Rahmen 54 angebracht, der zum lösbaren Anbringen an einen nicht dargestellten Traktor oder dgl. vorgesehen ist. Der Rahmen 54 ist freitragend, so daß Stützräder nicht erforderlich sind. Er wird in der Höhe so eingestellt, daß sich die Abdeckungen 46 möglichst dicht über dem Boden befinden. Auf diese Weise wird ein Innenraum der Abdeckungen 46 bis auf einen Ringspalt am Boden auch nach unten abgeschlossen, wodurch zum einen das Aufwirbeln und Herabdrücken des Mähguts durch die Leitschaufeln 32 bzw. Leiteinrichtungen 42 der rotierend angetriebenen Messer 12, 14, 16 wirkungsvoll unterstützt wird und wodurch zum anderen das abgeschnittene Mähgut lange Zeit in den Abdeckungen 46 verbleibt und dadurch vielfach in den Schneidbereich der Messer 12, 14, 16 gelangt, wodurch es sehr stark zerkleinert wird.

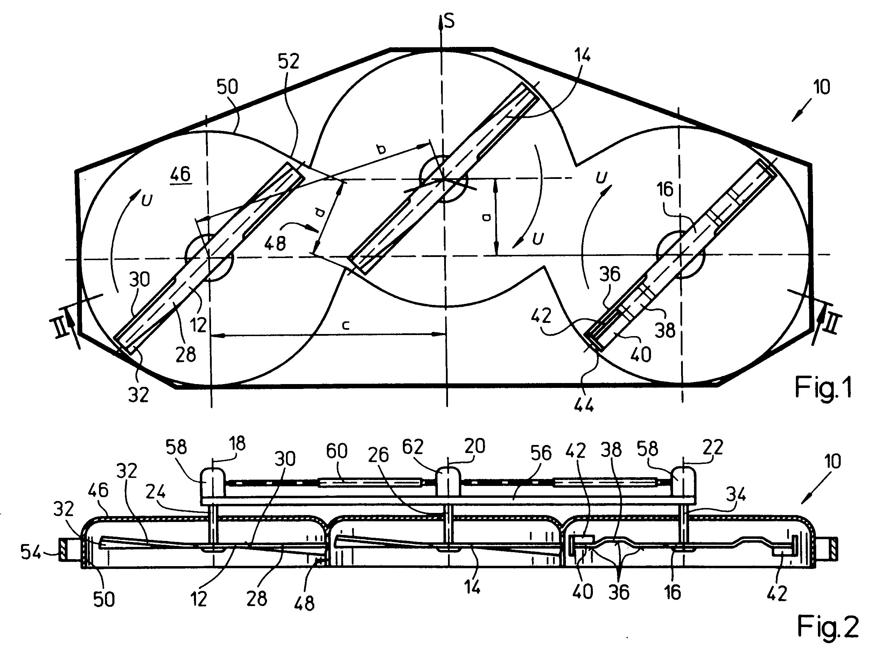

Die Messer 12, 14, 16 sind an einem separaten Traggerüst 56 (Fig. 2) angeordnet, der zur Schnitthöhenverstellung unabhängig vom die Abdeckung 46 haltenden Rahmen 54 höhenverstellbar an dem nicht dargestellten Traktor anbringbar ist.

Die Antriebswellen 24, 26, 34 der Messer 12, 14, 16 sind in axialer Richtung verschiebbar und drehbar durch die jeweilige Abdeckung 46 hindurchgeführt. Die Antriebswellen 24, 34 der beiden äußeren Messer 12, 16 sind in einem Winkelgetriebe 58 gelagert, das von einer, einen Längenausgleich ermöglichenden Verteilerwelle 60 angetrieben wird. Die beiden Verteilerwellen 60 werden von einem Verzweigungs- und Winkelgetriebe 62 angetrieben, in dem die Antriebswelle 26 des mittleren Messers 14 gelagert ist. Der Antrieb des Verzweigungs- und Winkelgetriebes 62 erfolgt von einer Zapfwelle des nicht dargestellten Traktors mittels einer in der Zeichnung nicht sichtbaren Hauptwelle.

Der Antrieb der drei Messer 12, 14, 16 untereinander kann auch mit Hilfe zweier Keilriemen erfolgen, die um drehfest auf den Antriebswellen 24, 26, 34 oberhalb der Abdeckungen angebrachte Keilriemenscheiben umlaufen (nicht dargestellt). Der eigentliche Antrieb erfolgt, wie zum dargestellten Ausführungsbeispiel beschrieben, mittels einer an eine Zapfwelle des Traktors angeschlossener Hauptwelle über ein Winkelgetriebe auf die Antriebswelle 26 des mittleren Messers 14.

## Patentansprüche

1. Sichelmähwerk mit mindestens zwei nach unten offenen, im übrigen im wesentlichen geschlossenen, topfförmigen und bezüglich einer Fortbewegungsrichtung (s) beim Mähen nebeneinander angeordneten Abdeckungen (46), in denen jeweils ein mindestens zweiflügeliges Messer (12, 14, 16) aufgenommen ist, das drehfest mit einer vertikalen Antriebswelle (24, 26, 34) verbunden ist und das an jedem Flügel eine in etwa radial verlaufende, in bezug auf eine Rotationsebene des Messers angestellte Leiteinrichtung (32) aufweist, wobei die Umfangswandungen (50) der Abdeckungen (46) im Verhältnis zum Gesamtumfang der Umfangswandung zwischen jeweils benachbarten Abdeckungen kurze Durchtrittsöffnungen (48) aufweisen, die derart ausgebildet sind, daß zumindest ein Teil des Mähguts, aus dem Wirkungsbereich des einen in den Wirkungsbereich des anderen Messers (12, 14, 16) gelangt, **dadurch gekennzeichnet**, daß sich der radiale Abstand der Umfangswandungen (50) der Abdeckungen (46) von der jeweiligen Antriebswelle (24) im Bereich der Durchtrittsöffnung (48) in Rotationsrichtung des jeweiligen Messers (12) zur Durchtrittsöffnung (48) hin vergrößert.

2. Sichelmähwerk nach Anspruch 1, **dadurch gekennzeichnet**, daß die Messer (12, 14, 16) in einem solchen Abstand voneinander angeordnet sind, daß sich die Mähkreise der Messer (12, 14, 16) nicht überschneiden.

3. Sichelmähwerk nach Anspruch 1 oder 2, **dadurch gekennzeichnet**, daß die Antriebswellen (24, 26, 34) der Messer (12, 14, 16) in Fortbewegungsrichtung (s) des Sichelmähwerks beim Mähen etwas nach vorn oder nach hinten versetzt nebeneinander angeordnet sind.

4. Sichelmähwerk nach einem der Ansprüche 1 bis 3, **dadurch gekennzeichnet**, daß die Länge einer Durchtrittsöffnung (48) etwa zwischen einem Drittel und dem vollen Radius des Messers (12, 14, 16) bzw. der Umfangswandung (50) beträgt.

5. Sichelmähwerk nach einem der Ansprüche 1 bis 4, **dadurch gekennzeichnet**, daß das Sichelmähwerk (10) an einem Arbeitsfahrzeug anbringbar ist.

6. Sichelmähwerk nach Anspruch 5, **dadurch gekennzeichnet**, daß das Sichelmähwerk (10) zum Antrieb der Messer (12, 14, 16) an eine Zapfwelle des Arbeitsfahrzeugs anschließbar ist.

7. Sichelmähwerk nach Anspruch 6, **dadurch gekennzeichnet**, daß der Antrieb der Messer (12, 14, 16) mittels Verteilerwellen (60) und Winkel- und Verzweigungsgetrieben (58, 62) erfolgt.

8. Sichelmähwerk nach Anspruch 5 oder 6, **dadurch gekennzeichnet**, daß der Antrieb der Messer (12, 14, 16) untereinander mittels Keilriemen erfolgt, die um drehfest auf den Antriebswellen (24, 26, 34) der Messer (12, 14, 16) angebrachte Keilriemenscheiben umlaufen.

9. Sichelmähwerk nach einem der vorhergehenden Ansprüche, **dadurch gekennzeichnet**, daß die Abdeckungen (46) bis dicht über den Boden herunterreichen.

10. Sichelmähwerk nach einem der vorhergehenden Ansprüche, **dadurch gekennzeichnet**, daß die Messer (12, 14, 16) unabhängig von den Abdeckungen (46) höhenverstellbar sind.

## Claims

1. Sickle mowing machine having at least two pot-shaped cowls (46) that are downwardly open, as for the rest essentially closed and positioned side-by-side with respect to one direction of mowing (s), and having at least one two-bladed knife (12, 14, 16) accomodated in each of said cowls, said knife being rigidly mounted on a vertical propeller shaft (24, 26, 34) and comprising a baffle contrivance (32) at each blade which runs about vertically and has an incidence with respect to a plane of rotation of the knife, wherein the circumferential sides (50) of said cowls in relation to the total circumference of the total circumferential side comprises a short through gap (48) between each of the adjoining cowls, said through gap (48) being developped such as to make at least a portion of the grass to be mowed promote from the domain of operation of the one knife to the domain of operation of the other knife (12, 14, 16), **characterized in that,** in the domain of the through gap (48), in the direction of rotation of each of the knifes (12), the radial distance of the circumferential sides (50) of the cowls (46) extends from each of the propeller shafts (24) towards the through gap (48).

2. Sickle mowing machine according to claim 1, **characterized in that** said knifes (12, 14, 16) are disposed in such a distance one from another that the mowing circles of the knifes (12, 14, 16) do not overlap.

3. Sickle mowing machine according to claim 1 or 2, **characterized in that**, in the direction of mowing (s), the propeller shafts (24, 16, 34) of the knifes (12, 14, 16) are disposed beside one another so as to be slightly staggered to the front or to the back.

4. Sickle mowing machine according to one of claims 1 to 3, **characterized in that** the width of a through gap (48) amounts approximately to between one third and the full radius of the knife (12, 14, 16) or the circumferential side (50), respectively.

5. Sickle mowing machine according to one of claims 1 to 4, **characterized in that** the sickle mowing machine (10) can be fixed to a utility vehicle.

6. Sickle mowing machine according to claim 5, **characterized in that**, for the actuation of the knifes (12, 14, 16), the sickle mowing machine (10) can be connected with a power take-off shaft of the utility vehicle.

7. Sickle mowing machine according to claim 6, **characterized in that** the actuation of the knifes (12, 14, 16) is performed by means of distributor shafts (60) and angular and ramification gears (58, 62).

8. Sickle mowing machine according to claim 5 or 6, **characterized in that** the actuation of the knifes (12, 14, 16) with one another is performed by means of V-belts which run round V-belt pullies that are rigidly mounted on the propeller shafts (24, 26, 34) of the knifes (12, 14, 16).

9. Sickle mowing machine according to one of the preceding claims, **characterized in that** the cowls (46) extend down as far as close to the ground.

10. Sickle mowing machine according to one of the preceding claims, **characterized in that,** regardless of the cowls (46), the knifes (12, 14, 16) are vertically adjustable.

## Revendications

1. Faucheuse d'au moins deux capots (46) en forme de pot qui sont ouverts vers le bas et pour le reste essentiellement fermés et disposés côte à côte en ce qui concerne un sens de marche (s) pendant le fauchage, où est logé un couteau ayant au moins deux pales (12, 14, 16) dans chacun desdits capots qui est joint à un arbre moteur vertical (24, 26, 34) en manière fortement fixée et qui comporte à chaque pale un dispositif de guidage (32) qui va à peu près radialement et est incliné en ce qui concerne un plan de rotation du couteau, les parois circonférentielles (50) desdits capots (46) comportant des embouchures courtes (48) par rapport à la circonférence totale de la paroi circonférentielle entre chacun desdits capots avoisinants, lesdites embouchures étant développées tellement qu' au moins une partie de l'herbe à faucher est conduite de la zone d'action de l'un des couteaux (12, 14, 16) dans la zone d'action de l'autre, **caractérisée en ce que** la distance radiale des parois circonférentielles (50) des capots (46) s'agrandit depuis chacun des arbres moteurs (24) dans la domaine de l'embouchure (48) en direction de rotation de chacun des couteaux (12) vers ladite embouchure (48).

2. Faucheuse d'après la revendication 1, **caractérisée en ce que** les couteaux (12, 14, 16) sont disposés l'un de l'autre de tel distance que les cercles d'action des couteaux (12, 14, 16) ne s'entrecoupent pas.

3. Faucheuse d'après la revendication 1 ou 2, **caractérisée en ce que**, en sens de marche (s) de la faucheuse pendant le fauchage, les arbres moteurs (24, 16, 34) des couteaux (12, 14, 16) sont disposés l'un à côté de l'autre et déplacés quelque peu en avant ou en arrière.

4. Faucheuse d'après une des revendications 1 à 3, **caractérisée en ce que** la largeur d'une embouchure se monte à environ entre un tiers et le rayon totale du couteau (12, 14, 16) ou selon le cas de la paroi circonférentielle.

5. Faucheuse d'après une des revendications 1 à 4, **caractérisée en ce que** l'on peut placer la faucheuse (10) à une véhicule de travail.

6. Faucheuse d'après la revendication 5, **caractérisée en ce que**, pour l'actionnement des couteaux (12, 14, 16), on peut joindre la faucheuse (10) à une prise de force de la véhicule de travail.

7. Faucheuse d'après la revendication 6, **caractérisée en ce que** l'actionnement des couteaux (12, 14, 16) s'effectue par moyen d'arbres distributeurs (60) et d'engrainages angulaires et de branchement (58, 62).

8. Faucheuse d'après la revendication 5 ou 6, **caractérisée en ce que** l'actonnement des couteaux (12, 14, 16) s'effectue mutuellement par moyen de courroies trapézoïdales qui tournent autour de poulies en V fortement placées sur les arbres moteurs (24, 26, 34) des couteaux (12, 14, 16).

9. Faucheuse d'après une des revendications précédentes, **caractérisée en ce que** les capots (46) vont jusqu'au ras du sol.

10. Faucheuse d'après une des revendications précédentes, **caractérisée en ce que**, indé pendemment des capots (46), les couteaux (12, 14, 16) sont déplaceables en hauteur.
